# EUROPEAN PATENT SPECIFICATION

(11) **EP 4 192 287 B1**
(45) Date of publication and mention of the grant of the patent: **08.05.2024**
(21) Application number: 21762647.2
(22) Date of filing: 10.08.2021
(51) Int. Cl.: A24F 40/40, A24F 40/50, A24F 40/60

(54) **AEROSOL GENERATION DEVICE COMPRISING A LIGHT GUIDE PIPE AND ASSOCIATED ASSEMBLY METHOD**
AEROSOLERZEUGUNGSVORRICHTUNG MIT EINEM LICHTLEITERROHR UND ZUGEHÖRIGES MONTAGEVERFAHREN
DISPOSITIF DE GÉNÉRATION D'AÉROSOL COMPRENANT UN TUBE DE GUIDE DE LUMIÈRE ET PROCÉDÉ D'ASSEMBLAGE ASSOCIÉ

(30) Priority: 10.08.2020 WO PCT/CN2020/108305
(43) Date of publication of application: 14.06.2023
(73) Proprietor: JT International S.A., 1202 Genève (CH)
(72) Inventor: GAO, Xu, Shenzhen City Guangdong Province 518101 (CN); KUANG, Huajun, Shenzhen City Guangdong Province 518109 (CN); LAKRAA, Karima, 1005 Lausanne (CH)
(74) Representative: Lavoix
(86) International application number: PCT/EP2021/072283
(87) International publication number: WO 2022/034086

(56) References cited:
- EP-A1- 3 542 653
- WO-A1-2018/086011
- WO-A1-2020/006305
- US-A1- 2019 133 184
- US-A1- 2019 364 957
- US-A1- 2020 154 789

## Description

### FIELD OF THE INVENTION

The present invention concerns an aerosol generation device comprising a light guide pipe.

The present invention also concerns an assembly method of such an aerosol generation device.

### BACKGROUND OF THE INVENTION

Different types of aerosol generation devices are already known in the art. For example, documents US 2019/133184 A1 and US 2019/364957 A1 disclose such aerosol generation devices. Generally, such devices comprise a storage portion for storing an aerosol forming precursor, which can comprise for example a liquid or a solid. A heating system is formed of one or more electrically activated resistive heating elements arranged to heat said precursor to generate the aerosol. The aerosol is released into a flow path extending between an inlet and outlet of the device. The outlet may be arranged as a mouthpiece, through which a user inhales for delivery of the aerosol.

In some aerosol generation devices, the precursor is stored in a removable cartridge. Thus, when the precursor is consumed, the cartridge can be easily removed and replaced. In order to attach the removable cartridge to the device body, a screw-threaded connection can for example be used.

Most of the aerosol generation devices known in the art are provided with at least one light indicator. Such an indicator may for example indicates when the device is in using or is charging. Additionally, information given by a same indicator may be interpreted differently by the user basing on a predetermined light/frequency code. For example, a green continuous light may signify that the device is in using or a charging is completed. A red continuous light may signify that the device is charging. A red blinking red can signify that the battery charge is low and the device is needed to be charged.

For ensure the operation of such a light indicator, a light-emitting diode (called "LED") is usually arranged inside the device, for example on a printed circuit board. To deliverer the light outside the device, light guides extending from the LED to an external surface of the device are usually used. The light guides collect lights from the LED and can be provided in a slightly opaque material in order to diffuse it.

Therefore, using the light guides imposes numerous constraints on the internal arrangement of device components as well as on the assembly method of the device. Additionally, the shape of these components and the external device design may also be negatively affected by these constraints.

### SUMMARY OF THE INVENTION

One of the aims of the present invention is to provide an aerosol generation device wherein internal components including notably a light guide may be arranged in a particular compact way. This simplifies the device assembly method and does not negatively affect the external design. The invention is defined in the appended independent claims 1 and 14. Preferred embodiments are matter of the dependent claims.

For this purpose, the invention relates to an aerosol generation device comprising:
- a bracket;
- a printed circuit board comprising a LED and fixed on the bracket
- an outside casing delimiting an interior part of the device and configured to receive the bracket, the outside casing comprising a side surface extending along a device axis and defining a side aperture ;
- a light guide pipe defining a central cavity and configured to be received in the side aperture to extend from the LED to the side surface through the side aperture when the bracket is received in the interior part of the device ;
- a pin configured to be inserted into the central cavity to lock the light guide pipe in the side aperture.

Indeed, using these features, a pin can be used to fix a light guide in a simple and compact way.

According to some embodiments, the outside casing is made of a single piece and defines an insertion opening, the bracket being received in the interior part of the device by sliding through the insertion opening ;
preferably, the insertion opening extending perpendicularly to the device axis.

Thanks to these features, the number of protruding elements on the external surface of the outside casing can be minimized so as to ensure particular user sensations while handling the device.

According to some embodiments, the bracket comprises a fixing portion defining a fixing hole configured to face the side aperture when the bracket is received in the interior part of the device, the light guide pipe being configured to lock the bracket in the interior part of the device when the pin is inserted into the central cavity.

Thanks to these features, the combination of the light guide pipe and the pin can be used for both purposes, light transmission and fixing the bracket inside the outside casing. Moreover, the combination can form unique fixing means of the bracket inside the outside casing visible on an external surface of the outside casing.

According to some embodiments, the light guide pipe is made of at least partially transparent material and the pin is made of a solid material.

Thanks to these features, it is possible to achieve good fixing properties of the combination of the light guide pipe and the pin.

According to some embodiments, at least one high-temperature resistant adhesive tape wound around the bracket and designed to fix the bracket in the interior part of the device.

Thanks to these features, the fixation of the bracket inside the outside casing can be improved.

According to some embodiments, the LED is aligned with the side aperture according to a transverse axis when the bracket is received in the interior part of the device, the transverse axis being perpendicular to the device axis.

According to some embodiments, the light guide pipe defines a cylindrical shape extending along the transverse axis when it is inserted in the side aperture.

According to some embodiments, the central cavity is sealed.

Thanks to these features, a light guide pipe of a compact shape and ensuring a better fixation can be used.

According to some embodiments, the printed circuit board further comprises a switch arranged aligned with the side aperture according to a transverse axis when the bracket is received in the interior part of the device, the transverse axis being perpendicular to the device axis.

According to some embodiments, the LED is arranged away from the transverse axis when the bracket is received in the interior part of the device.

According to some embodiments, the light guide pipe comprises a first portion of cylindrical shape extending along the transverse axis and a second portion configured to link the LED to the first portion, when the light guide pipe is inserted into the side aperture.

Thanks to these features, it is possible to arrange a switch directly on the printed circuit board and to actuate it using the pin.

According to some embodiments, the pin extends between two ends and is configured to pass through the central cavity to come in contact with the switch by one of its ends, the opposite end being configured to be flushed in the central cavity.

Thanks to these features, it is possible to prevent undesirable switch actuating while holding the device.

According to some embodiments, the pin extends between two ends and is configured to pass through the central cavity to come in contact with the switch by one of its ends, the opposite end being configured to protrude from the central cavity.

Thanks to these features, the switch can be actuated in a simple way.

The invention also relates to an assembly method ), comprising the following steps:
- fix a printed circuit board comprising a LED on a bracket;
- insert the bracket in an interior part of the device delimited by an outside casing, the outside casing comprising a side surface extending along a device axis and defining a side aperture;
- insert a light guide pipe defining a central cavity in the side aperture to extend from the LED to the side surface through the side aperture;
- insert a pin into the central cavity to lock the light guide pipe in the side aperture.

According to some embodiments, the outside casing is made of a single piece and defines an insertion opening and wherein the step of inserting the bracket in the interior part of the device is carried out by sliding the bracket in the interior part of the device through the insertion opening.

Thanks to these features, the assembly method may be performed in a simple way.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a perspective view of an aerosol generation device according to a first embodiment of the invention;
- Figure 2 is an exploded view of the aerosol generation device of Figure 1, the view being inversed in comparison with the view of Figure 1;
- Figure 3 is an exploded view of a part of the aerosol generation device of Figure 1;
- Figure 4 is a cross-sectional view of a part of the aerosol generation device according to plane IV of Figure 1;
- Figure 5 is a view similar to the view of Figure 3 wherein the aerosol generation device is according to a second embodiment of the invention; and
- Figure 6 is a view similar to the view of Figure 4 wherein the aerosol generation device is according to the second embodiment of the invention.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generation device"** or **"device"** may include a vaping device to deliver an aerosol to a user, including an aerosol for vaping, by means of aerosol generating unit (e.g. an aerosol generating element which generates vapor which condenses into an aerosol before delivery to an outlet of the device at, for example, a mouthpiece, for inhalation by a user). The device may be portable. "Portable" may refer to the device being for use when held by a user. The device may be adapted to generate a variable amount of aerosol, e.g. by activating a heater system for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapor to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol"** may include a suspension of precursor as one or more of: solid particles; liquid droplets; gas. Said suspension may be in a gas including air. Aerosol herein may generally refer to/include a vapor. Aerosol may include one or more components of the precursor.

As used herein, the term **"aerosol-forming precursor"** or **"precursor"** or **"aerosol-forming substance"** or **"substance"** or **"vaporizable material"** is used to designate any material that is vaporizable in air to form aerosol. Vaporisation is generally obtained by a temperature increase up to the boiling point of the vaporization material, such as at a temperature up to 400°C, preferably up to 350°C. The vaporizable material may, for example, comprise or consist of an aerosol-generating liquid, gel, or wax or the like or an aerosol -generating solid that may be in the form of a rod, which contains processed tobacco material, a crimped sheet or oriented strips of reconstituted tobacco (RTB), or any combination of these. The vaporizable material may comprise one or more of: nicotine; caffeine or other active components. The active component may be carried with a carrier, which may be a liquid. The carrier may include propylene glycol or glycerin. A flavoring may also be present. The flavoring may include Ethylvanillin (vanilla), menthol, Isoamyl acetate (banana oil) or similar.

### FIRST EMBODIMENT OF THE INVENTION

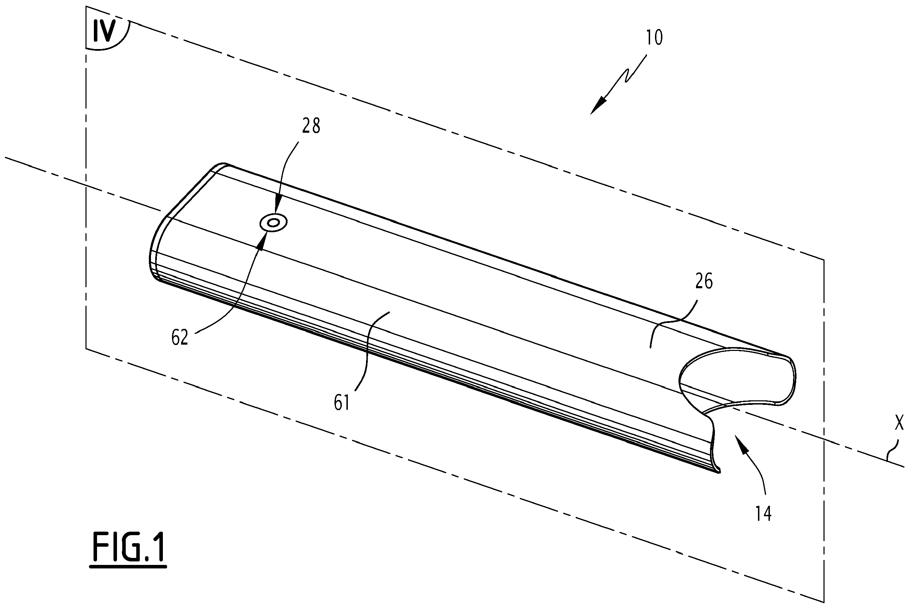

An aerosol generation device 10 according to a first embodiment of the invention is showed on Figure 1. In the example of this Figure 1, the aerosol generation device 10 is designed to operate with a removable cartridge (not showed) which is intended to be received in a payload compartment 14 also visible on Figure 1. The cartridge comprises a precursor storage portion able to store a precursor and at least a heater able to heat the precursor to generate aerosol. The heater of the cartridge is connected electrically to a power source of the device 10 through a pair of contacts arranged in both cartridge and aerosol generation device 10. According to another embodiment of the invention, the heater of the cartridge may be coupled with a heating element arranged in the device 10 and powered by the power source of this device 10. In this case, heat is transmitted directly from the heating element of the device to the heater of the cartridge. According to still another embodiment of the invention, the payload compartment 14 defines a fixed, in respect to the device 10, precursor storage portion. In this case, the precursor storage portion can for example be refilled with a precursor.

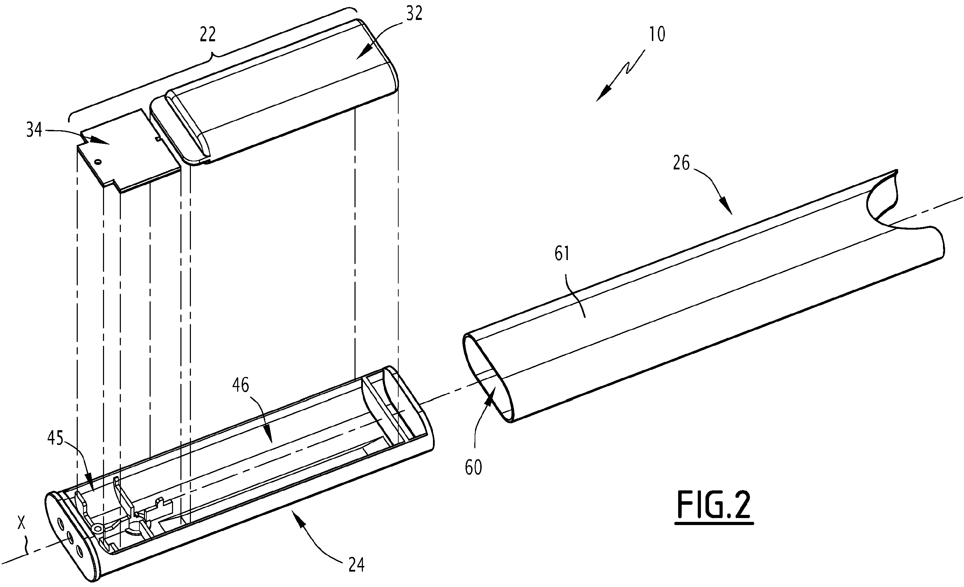

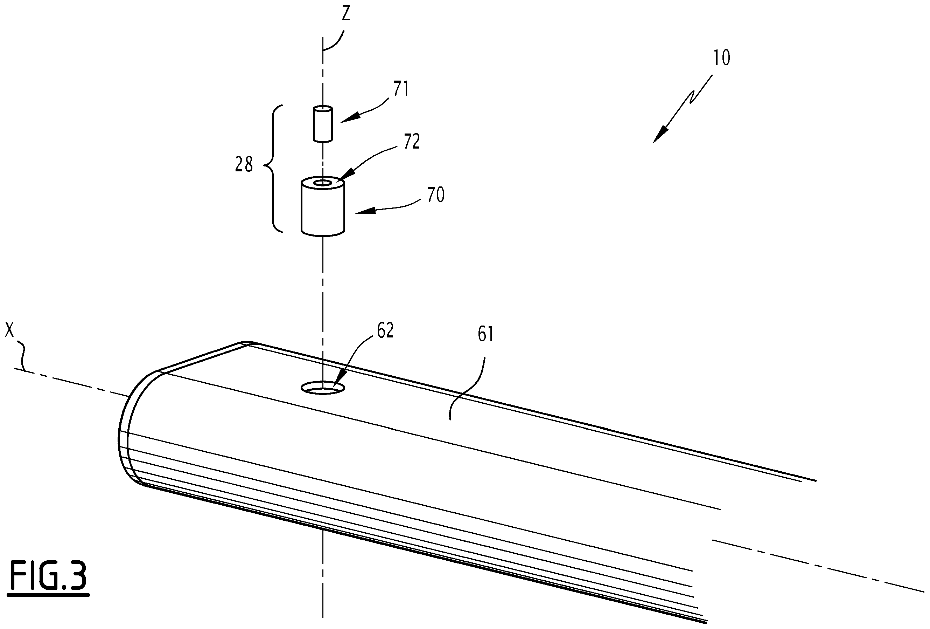

The aerosol generation device 10 extends along an axis X called hereinafter device axis X. Referring to Figure 1 and Figure 2, the aerosol generation device 10 comprises a plurality of internal components 22, a bracket 24 configured to support the internal components 22, an outside casing 26 configured to receive the bracket 24 with the internal components 22 and fixing means 28 (visible on Figures 1 and 3) configured to fix the bracket 24 with the internal components 22 inside the outside casing 26.

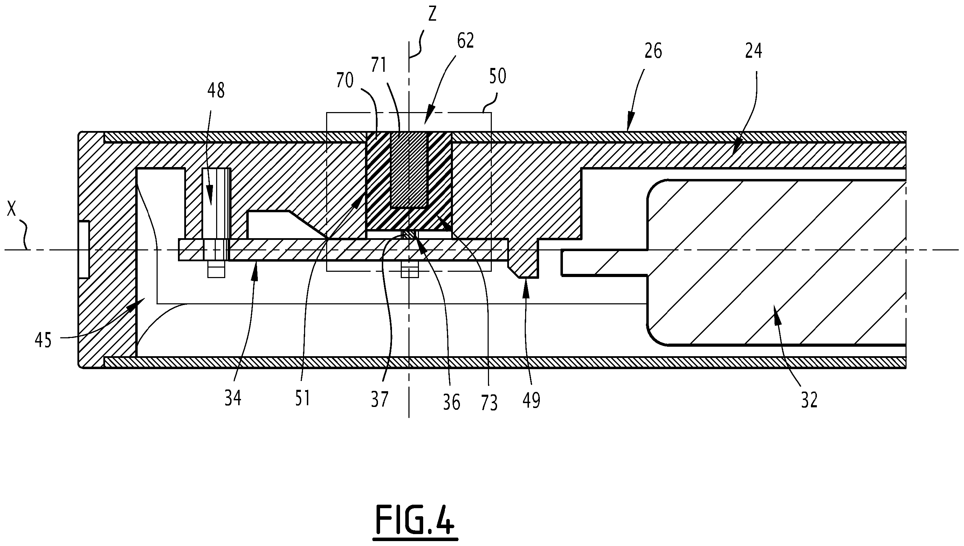

The internal components 22 comprise notably a battery 32 and a printed circuit board 34. The battery 32 is for example a rechargeable lithium-ion battery known in the art. The printed circuit board 34 comprises a plurality of electronic components configured to control the operation of the aerosol generation device 10. Particularly, the printed circuit board 34 comprises a controller (not showed) configured to control for example a voltage provided by the battery 32 to the heater of the cartridge, and at least one protruding element 36 (showed on Figure 4) protruding from the printed circuit board 34. According to the first embodiment of the invention, the protruding element 36 presents an indicator such a LED 37 (light-emitting diode) used to indicate with a light at least one operation mode of the device 10 and controlled by the controller 35. Thus, the LED can indicate that the device 10 is being operated or charged. The LED can also indicate that the battery is low or that the device 10 is connected to an external device. The LED can for example use different colors and/or light frequencies to indicate different operation modes. The internal components 22 may also comprise other components known per se used to ensure different functionalities of the device 10.

In the example of Figure 2, the bracket 24 is composed of a single piece defining, successively arranged along the device axis X, a circuit compartment 45 able to receive the printed circuit board 34 and a battery compartment 46 able to receive the battery 32. Particularly, the circuit compartment 45, also visible on Figure 4, is configured to receive and fix the printed circuit board 34 parallel to the device axis X so as when the bracket 24 is received into the outside casing 26, the printed circuit board 34 is arranged approximately in the middle of the internal part of the outside casing 26 in respect with a transverse axis Z perpendicular to the device axis X as it is showed on Figure 4. In the example of Figure 4, to fix the printed circuit board 34 to the bracket 24, the bracket 24 defines in the circuit compartment 45 a screw hole 48 and a locking tooth 49 arranged on opposite extremities of the circuit compartment 45. Thus, one extremity of the printed circuit board 34 may be screwed using the screw hole 48 and the other extremity of the printed circuit board 34 may be locked using the locking tooth 49.

As it is showed on Figure 4, the bracket 24 defines a fixing portion 50 usable to fix the bracket 24 to the outside casing 26. In the example of this figure, the fixing portion 50 is arranged in the circuit compartment 45 and presents a fixing hole 51 able to receive the fixing means 28 as it will be explained below. The fixing hole 51 is arranged to face the protruding element 36 when the printed circuit board 34 is fixed to the bracket 24.

The outside casing 26 extends along the device axis X and delimits an interior part of the device 10 able to receive notably the bracket 24 with the internal components 22 through an insertion opening 60 extending perpendicularly to the device axis X, as it is showed on Figure 2. The outside casing 26 comprises a side surface 61 extending along the device axis X and defining a side aperture 62. The side aperture 62 is configured to receive the fixing means 28 as it will be explained below. Additionally, the side aperture 62 is arranged so as to face the circuit compartment 45 and notably the fixing hole 51 when the bracket 24 is received into the outside casing 26. Thus, with this arrangement, the side aperture 62 faces the protruding element 36 of the printed circuit board 34 when the printed circuit board 34 is fixed to the bracket 24. In other words, the side aperture 62, the fixing hole 51 and the protruding element 36 are arranged according to the transverse axis Z.

Advantageously according to the invention, the side aperture 62 forms a unique opening on the side surface 61 of the outside casing 26. Additionally, the outside casing 26 can be made of a single piece, from for example a metallic material.

Referring to Figure 3, the fixing means comprise a light guide pipe 70 and a pin 71.

The light guide pipe 70 is configured to be received in the side aperture 62 to extend from the protruding element 36 and notably from the LED 37 to the side surface 61 through the side aperture 62 and the fixing hole 51 when the bracket 24 is received in the outside casing 26. The light guide pipe 70 is made of at least partially transparent and for example flexible material. Additionally, according to the first embodiment of the invention, the light guide pipe 70 presents a cylindrical shape intended to extend along the transverse axis Z, with for example a circular cross-section. The light guide pipe 70 defines a central cavity 72 configured to receive the pin 71. The dimensions of the cavity 72 are for example chosen to tightly feet a lateral surface of the pin 71. Finally, in the example of Figure 4, the central cavity 72 is sealed at the extremity opposite to the extremity in contact with the side surface 61. In this case, the light guide pipe 70 forms a back wall 73 configured to face the protruding element 36. An external surface of the back wall 73 is for example configured to be in contact with the protruding element 36.

The pin 71 is configured to be inserted into the central cavity 72 of the light guide pipe 70 to lock the light guide pipe 70 in the side aperture 62. For this purpose, the pin 71 may present a cylindrical shape configured to cooperate with the central cavity 72. Particularly, the pin 71 extends between two ends and is configured to pass through the central cavity 72 so as one of its ends comes in contact with an internal surface of the back wall 73. The other end may be flushed in the cavity 72, protrude from the cavity 72 or form a smooth surface with the corresponding extremity of the cavity and the side surface 61. The pin 71 is made of a solid material, like for example a metal material. Advantageously, if the light guide pipe 70 made of a flexible material, the pin 71 may compress at least slightly this material in order to be inserted into the cavity 72.

Optionally, the fixing means 28 may further comprise at least one high-temperature resistant adhesive tape intended to be wound around the bracket 24 and designed to fix the bracket 24 in the interior part of the device 10.

An assembly method of the aerosol generation device 10 according to the invention will now be explained. At the initial step, the internal components 22 are fixed on the bracket 24. Particularly, according to the example of Figure 2, the battery 32 is inserted into the battery compartment 46 and the printed circuit board 34 is inserted into the circuit compartment 45. The printed circuit board 34 may be fixed to the bracket 24 using the screw hole 48 and the locking tooth 49. Optionally, the high-temperature resistant adhesive tape may be wound around the bracket 24. At the next step, the bracket 24 with the mounted internal components 22 is slid into the outside casing 28 through the insertion opening 60. In this position, the fixing hole 51 and the side aperture 62 face the protruding element 36. At the next step, the light guide pipe 70 is inserted into the side aperture 62 of the casing 26 and the fixing hole 51 the bracket 24. At the next step, the pin 71 is inserted into the cavity 72 of the light guide pipe 70 to lock the light guide pipe 70 in the side aperture 62. This also locks the bracket 24 inside the outside casing 26.

### SECOND EMBODIMENT OF THE INVENTION

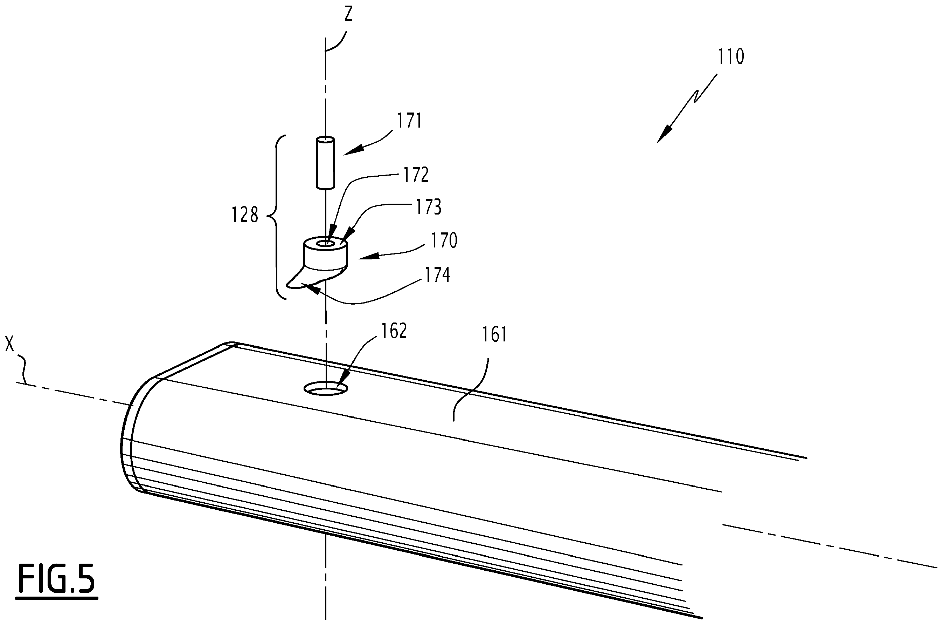

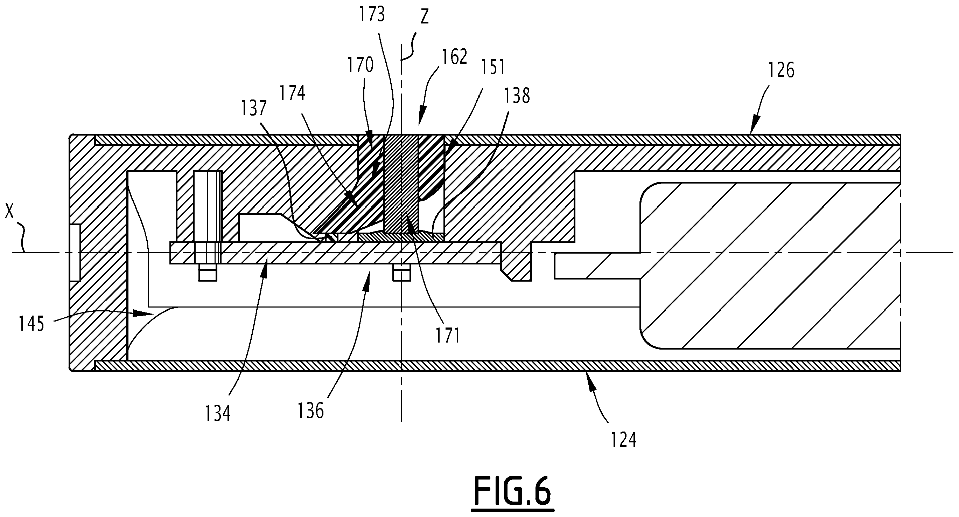

An aerosol generation device 110 according to the second embodiment of the invention will now be explained in reference to Figures 5 and 6. The aerosol generation device 110 is similar to the aerosol generation device 10 explained above except the features described below.

As in the previous case and as it is showed on Figure 6, the aerosol generation device 110 according to the second embodiment of the invention comprises a printed circuit board 134 received in a circuit compartment 145 of a bracket 124. The circuit compartment 145 and the bracket 124 are similar to respectively the circuit compartment 45 and the bracket 24 explained above.

As in the previous case, the printed circuit board 134 comprises a protruding element 136 comprising also an indicator 137 such a LED. Contrary to the previous case, the protruding element also comprises a switch 138 usable for example to switch at least one operation mode of the device 10. For this purpose, the switch 138 is for example connected to the controller of the device 110 and presents for example a push button.

As it is showed on Figure 6, the switch 138 may be aligned with a side aperture 162 formed in the outside casing 126 and a fixing hole 151 formed in the bracket 124, according to the transverse axis Z. In this case, the LED 137 as arranged away from the transverse axis Z. According to another embodiment, the arrangements of the switch 138 and the LED 137 may be inversed. According still to another embodiment, the protruding element 136 comprises only the LED 137 arranged away from the transverse axis Z.

Fixing means 128 intended to fix the bracket 124 into the outside casing 126 are showed on Figure 5. As in the previous case, the fixing means 128 comprise a light guide pipe 170 and a pin 171.

As in the previous case, the light guide pipe 170 is configured to be received in the side aperture 162 to extend from the protruding element 136 and notably from the LED 137 to the side surface 161 through the side aperture 162 when the bracket 124 is received in the outside casing 126. For this purpose, according to the second embodiment of the invention, the light guide pipe 170 comprises a first portion 173 of cylindrical shape extending along the transverse axis Z and a second portion 174 configured to link the LED 137 to the first portion 173, when the light guide pipe 170 is inserted into the side aperture 162. Thus, the second portion 174 forms a tail shape protruding from the cylindrical shape formed by the first portion 173. The light guide pipe 170 also defines a cavity 172 configured to extend along the transverse axis Z and receive the pin 171 to fix the light guide pipe 172 into the side aperture 162. Contrary to the previous case, the cavity 172 may cross the light guide pipe 172 along the transverse axis.

The pin 171 is for example similar to the pin 71 explained above. However, according to the present embodiment, the pin 171 can cross entirely the cavity 172 to come in contact with the protruding element 136 and notably with the switch 138. Depending on the function of the switch 138, the length of the pin 171 according to the transverse axis Z may be adapted. For example, when the switching function of the switch 138 triggers a non-usual operation mode of the device (as "RESET" mode for example), the length of the pin 171 may be adapted so as the pin 171 is flushed into the cavity 172. In the switching function of the switch 138 triggers a more usual operation mode for the user (as "ON/OFF" switching mode), the length of the pin 171 according to the transverse axis Z may be adapted so as the pin 171 forms a smooth surface with the side surface 161 or protrudes from this side surface 161. In this last case, it may be easily actuated by the user.

The assembly method of the aerosol generation device 110 according to the second embodiment of the invention is similar the assembly method of the aerosol generation device 10 according to the first embodiment of the invention.

## Claims

1. An aerosol generation device (10; 110) comprising:
- a bracket (24; 124);
- a printed circuit board (34; 134) comprising a LED (37; 137) and fixed on the bracket (24; 124);
- an outside casing (26; 126) delimiting an interior part of the device (10; 110) and configured to receive the bracket (24; 124), the outside casing (26; 126) comprising a side surface (61; 161) extending along a device axis (X) and defining a side aperture (62; 162);
the aerosol generation device (10; 110) being **characterized in that** it further comprises:
- a light guide pipe (70; 170) defining a central cavity (72; 172) and configured to be received in the side aperture (62; 162) to extend from the LED (37; 137) to the side surface (61; 161) through the side aperture (62; 162) when the bracket (24; 124) is received in the interior part of the device (10; 110);
- a pin (71; 171) configured to be inserted into the central cavity (72; 172) to lock the light guide pipe (70; 170) in the side aperture (62; 162).

2. The aerosol generation device (10; 110) according to claim 1, wherein the outside casing (26; 126) is made of a single piece and defines an insertion opening (60), the bracket (24; 124) being received in the interior part of the device (10; 110) by sliding through the insertion opening (60);
preferably, the insertion opening (60) extending perpendicularly to the device axis (X).

3. The aerosol generation device (10; 110) according to claim 1 or 2, wherein the bracket (24; 124) comprises a fixing portion (50) defining a fixing hole (51; 151) configured to face the side aperture (62; 162) when the bracket (24; 124) is received in the interior part of the device (10; 110);
the light guide pipe (70; 170) being configured to lock the bracket (24; 124) in the interior part of the device (10; 110) when the pin (71; 171) is inserted into the central cavity (72; 172).

4. The aerosol generation device (10; 110) according to any one of the preceding claims, wherein the light guide pipe (70; 170) is made of at least partially transparent material and the pin (71; 171) is made of a solid material.

5. The aerosol generation device (10; 110) according to any one of the preceding claims, further comprising at least one high-temperature resistant adhesive tape wound around the bracket (24; 124) and designed to fix the bracket (24; 124) in the interior part of the device (10; 110).

6. The aerosol generation device (10; 110) according to any one of the preceding claims, wherein the LED (37; 137) is aligned with the side aperture (62; 162) according to a transverse axis (Z) when the bracket (24; 124) is received in the interior part of the device (10; 110), the transverse axis (Z) being perpendicular to the device axis (X).

7. The aerosol generation device (10) according to claim 6, wherein the light guide pipe (70) defines a cylindrical shape extending along the transverse axis (Z) when it is inserted in the side aperture (62).

8. The aerosol generation device (10) according to claim 7, wherein the central cavity (72) is sealed.

9. The aerosol generation device (110) according to any one of claims 1 to 5, wherein the printed circuit board (134) further comprises a switch (138) arranged aligned with the side aperture (162) according to a transverse axis (Z) when the bracket (124) is received in the interior part of the device (110), the transverse axis (Z) being perpendicular to the device axis (X).

10. The aerosol generation device (110) according to claim 9, wherein the LED (137) is arranged away from the transverse axis (Z) when the bracket (124) is received in the interior part of the device (110).

11. The aerosol generation device (110) according to claim 10, wherein the light guide pipe (170) comprises a first portion (173) of cylindrical shape extending along the transverse axis (Z) and a second portion (174) configured to link the LED (137) to the first portion (173), when the light guide pipe (170) is inserted into the side aperture (162).

12. The aerosol generation device (110) according to any one of claims 9 to 11, wherein the pin (171) extends between two ends and is configured to pass through the central cavity (172) to come in contact with the switch (138) by one of its ends, the opposite end being configured to be flushed in the central cavity (172).

13. The aerosol generation device (110) according to any one of claims 9 to 11, wherein the pin (171) extends between two ends and is configured to pass through the central cavity (172) to come in contact with the switch (138) by one of its ends, the opposite end being configured to protrude from the central cavity (172).

14. An assembly method of an aerosol generation device (10; 110), comprising the following steps:
- fix a printed circuit board (34; 134) comprising a LED (37; 137) on a bracket (24; 124);
- insert the bracket (24; 124) in an interior part of the device (10; 110) delimited by an outside casing (26; 126), the outside casing (26; 115) comprising a side surface (61; 161) extending along a device axis (X) and defining a side aperture (62; 162);
- insert a light guide pipe (70; 170) defining a central cavity (72; 172) in the side aperture (62; 162) to extend from the LED (37; 137) to the side surface (61; 161) through the side aperture (62; 162);
- insert a pin (71; 171) into the central cavity (72; 172) to lock the light guide pipe (70; 170) in the side aperture (62; 162).

15. The assembly method according to claim 14, wherein the outside casing (26; 126) is made of a single piece and defines an insertion opening (60) and wherein the step of inserting the bracket (24; 124) in the interior part of the device (10; 110) is carried out by sliding the bracket (24; 124) in the interior part of the device (10; 110) through the insertion opening (60).

## Patentansprüche

1. Aerosolerzeugungsvorrichtung (10; 110) umfassend:
- eine Halterung (24; 124);
- eine Leiterplatte (34; 134), die eine LED (37; 137) umfasst und an der Halterung (24; 124) befestigt ist;
- ein äußeres Gehäuse (26; 126), das einen inneren Teil der Vorrichtung (10; 110) begrenzt und so konfiguriert ist, dass es die Halterung (24; 124) aufnimmt, wobei das äußere Gehäuse (26; 126) eine Seitenfläche (61; 161) umfasst, die sich entlang einer Vorrichtungsachse (X) erstreckt und eine seitliche Öffnung (62; 162) definiert;
die Aerosolerzeugungsvorrichtung (10; 110) **dadurch gekennzeichnet ist, dass** sie ferner umfasst:
- ein Lichtleitrohr (70; 170), das einen zentralen Hohlraum (72; 172) definiert und so konfiguriert ist, dass es in der seitlichen Öffnung (62; 162) aufgenommen wird, um sich von der LED (37; 137) durch die seitliche Öffnung (62; 162) zu der Seitenfläche (61; 161) zu erstrecken, wenn die Halterung (24; 124) in dem inneren Teil der Vorrichtung (10; 110) aufgenommen ist;
- einen Stift (71; 171), der so konfiguriert ist, dass er in den zentralen Hohlraum (72; 172) eingeführt werden kann, um das Lichtleitrohr (70; 170) in der seitlichen Öffnung (62; 162) zu verriegeln.

2. Aerosolerzeugungsvorrichtung (10; 110) nach Anspruch 1, wobei das äußere Gehäuse (26; 126) aus einem einzigen Stück hergestellt ist und eine Einführöffnung (60) definiert, wobei die Halterung (24; 124) durch Gleiten durch die Einführöffnung (60) in dem inneren Teil der Vorrichtung (10; 110) aufgenommen wird;
wobei die Einführöffnung (60) vorzugsweise senkrecht zur Vorrichtungsachse (X) verläuft.

3. Aerosolerzeugungsvorrichtung (10; 110) nach Anspruch 1 oder 2, wobei die Halterung (24; 124) einen Befestigungsabschnitt (50) umfasst, der ein Befestigungsloch (51; 151) definiert, das so konfiguriert ist, dass es der seitlichen Öffnung (62; 162) zugewandt ist, wenn die Halterung (24; 124) im Innenteil der Vorrichtung (10; 110) aufgenommen ist;
wobei das Lichtleitrohr (70; 170) so konfiguriert ist, dass es die Halterung (24; 124) im Innenteil der Vorrichtung (10; 110) verriegelt, wenn der Stift (71; 171) in den zentralen Hohlraum (72; 172) eingeführt wird.

4. Aerosolerzeugungsvorrichtung (10; 110) nach einem der vorhergehenden Ansprüche, wobei das Lichtleitrohr (70; 170) aus zumindest teilweise transparentem Material und der Stift (71; 171) aus einem festen Material besteht.

5. Die Aerosolerzeugungsvorrichtung (10; 110) nach einem der vorhergehenden Ansprüche, die ferner mindestens ein hochtemperaturbeständiges Klebeband umfasst, das um die Halterung (24; 124) gewickelt ist und dazu dient, die Halterung (24; 124) im Innenteil der Vorrichtung (10; 110) zu befestigen.

6. Aerosolerzeugungsvorrichtung (10; 110) nach einem der vorhergehenden Ansprüche, wobei die LED (37; 137) mit der seitlichen Öffnung (62; 162) gemäß einer Querachse (Z) ausgerichtet ist, wenn die Halterung (24; 124) im Innenteil der Vorrichtung (10; 110) aufgenommen ist, wobei die Querachse (Z) senkrecht zur Vorrichtungsachse (X) ist.

7. Aerosolerzeugungsvorrichtung (10) nach Anspruch 6, wobei das Lichtleitrohr (70) eine zylindrische Form definiert, die sich entlang der Querachse (Z) erstreckt, wenn es in die seitliche Öffnung (62) eingesetzt ist.

8. Aerosolerzeugungsvorrichtung (10) nach Anspruch 7, wobei der zentrale Hohlraum (72) versiegelt ist:

9. Aerosolerzeugungsvorrichtung (110) nach einem der Ansprüche 1 bis 5, wobei die Leiterplatte (134) ferner einen Schalter (138) umfasst, der mit der seitlichen Öffnung (162) gemäß einer Querachse (Z) ausgerichtet ist, wenn die Halterung (124) im Innenteil der Vorrichtung (110) aufgenommen ist, wobei die Querachse (Z) senkrecht zur Vorrichtungsachse (X) ist.

10. Aerosolerzeugungsvorrichtung (110) nach Anspruch 9, wobei die LED (137) von der Querachse (Z) entfernt angeordnet ist, wenn die Halterung (124) im Innenteil der Vorrichtung (110) aufgenommen ist.

11. Aerosolerzeugungsvorrichtung (110) nach Anspruch 10, wobei das Lichtleitrohr (170) einen ersten Abschnitt (173) mit zylindrischer Form, der sich entlang der Querachse (Z) erstreckt, und einen zweiten Abschnitt (174) umfasst, der so konfiguriert ist, dass er die LED (137) mit dem ersten Abschnitt (173) verbindet, wenn das Lichtleitrohr (170) in die seitliche Öffnung (162) eingesetzt ist.

12. Aerosolerzeugungsvorrichtung (110) nach einem der Ansprüche 9 bis 11, wobei sich der Stift (171) zwischen zwei Enden erstreckt und so konfiguriert ist, dass er durch den zentralen Hohlraum (172) hindurchgeht, um über eines seiner Enden in Kontakt mit dem Schalter (138) zu kommen, wobei das gegenüberliegende Ende so konfiguriert ist, dass es in dem zentralen Hohlraum (172) gespült wird.

13. Aerosolerzeugungsvorrichtung (110) nach einem der Ansprüche 9 bis 11, wobei sich der Stift (171) zwischen zwei Enden erstreckt und so konfiguriert ist, dass er durch den zentralen Hohlraum (172) hindurchgeht, um über eines seiner Enden in Kontakt mit dem Schalter (138) zu kommen, wobei das gegenüberliegende Ende so konfiguriert ist, dass es aus dem zentralen Hohlraum (172) herausragt.

14. Verfahren zum Zusammenbau einer Aerosolerzeugungsvorrichtung (10; 110), das die folgenden Schritte umfasst:
- eine Leiterplatte (34; 134) mit einer LED (37; 137) auf einer Halterung (24; 124) befestigen;
- Einsetzen der Halterung (24; 124) in einen inneren Teil der Vorrichtung (10; 110), der durch ein äußeres Gehäuse (26; 126) begrenzt ist, wobei das äußere Gehäuse (26; 115) eine Seitenfläche (61; 161) aufweist, die sich entlang einer Vorrichtungsachse (X) erstreckt und eine seitliche Öffnung (62; 162) definiert;
- Einsetzen eines Lichtleitrohrs (70; 170), das einen zentralen Hohlraum (72; 172) definiert, in die seitliche Öffnung (62; 162), um sich von der LED (37; 137) durch die seitliche Öffnung (62; 162) zur Seitenfläche (61; 161) zu erstrecken;
- einen Stift (71; 171) in den zentralen Hohlraum (72; 172) einführen, um das Lichtleitrohr (70; 170) in der seitlichen Öffnung (62; 162) zu verriegeln.

15. Montageverfahren nach Anspruch 14, wobei das äußere Gehäuse (26; 126) aus einem einzigen Stück hergestellt ist und eine Einführöffnung (60) definiert, und wobei der Schritt des Einführens der Halterung (24; 124) in den Innenteil der Vorrichtung (10; 110) durch Schieben der Halterung (24; 124) in den Innenteil der Vorrichtung (10; 110) durch die Einführöffnung (60) ausgeführt wird.

## Revendications

1. Dispositif de génération d'aérosol (10, 110) comprenant :
- un support (24 ; 124) ;
- une carte de circuit imprimé (34 ; 134) comprenant une LED (37 ; 137) et fixée sur le support (24 ; 124) ;
- une enveloppe extérieure (26 ; 126) délimitant une partie intérieure du dispositif (10 ; 110) et configurée pour recevoir le support (24 ; 124), l'enveloppe extérieure (26 ; 126) comprenant une surface latérale (61 ; 161) s'étendant le long d'un axe du dispositif (X) et définissant une ouverture latérale (62 ; 162) ;
le dispositif de génération d'aérosol (10 ; 110) étant **caractérisé en ce qu'**il comprend en outre :
- un tube de guidage de la lumière (70 ; 170) définissant une cavité centrale (72 ; 172) et configuré pour être reçu dans l'ouverture latérale (62 ; 162) afin de s'étendre de la LED (37 ; 137) à la surface latérale (61 ; 161) à travers l'ouverture latérale (62 ; 162) lorsque le support (24 ; 124) est reçu dans la partie intérieure de l'appareil (10 ; 110) ;
- une goupille (71 ; 171) configurée pour être insérée dans la cavité centrale (72 ; 172) afin de verrouiller le tube de guidage de la lumière (70 ; 170) dans l'ouverture latérale (62 ; 162).

2. Dispositif de génération d'aérosol (10 ; 110) selon la revendication 1, dans lequel le boîtier extérieur (26 ; 126) est constitué d'une seule pièce et définit une ouverture d'insertion (60), le support (24 ; 124) étant reçu dans la partie intérieure du dispositif (10 ; 110) par glissement à travers l'ouverture d'insertion (60) ;
de préférence, l'ouverture d'insertion (60) s'étend perpendiculairement à l'axe du dispositif (X).

3. Dispositif de génération d'aérosol (10 ; 110) selon la revendication 1 ou 2, dans lequel le support (24 ; 124) comprend une partie de fixation (50) définissant un trou de fixation (51 ; 151) configuré pour faire face à l'ouverture latérale (62 ; 162) lorsque le support (24 ; 124) est reçu dans la partie intérieure du dispositif (10 ; 110) ;
le tube de guidage de la lumière (70 ; 170) est configuré pour verrouiller le support (24 ; 124) dans la partie intérieure du dispositif (10 ; 110) lorsque la goupille (71 ; 171) est insérée dans la cavité centrale (72 ; 172).

4. Dispositif de génération d'aérosol (10 ; 110) selon l'une quelconque des revendications précédentes, dans lequel le tube de guidage de la lumière (70 ; 170) est constitué d'un matériau au moins partiellement transparent et la goupille (71 ; 171) est constituée d'un matériau solide.

5. Dispositif de génération d'aérosol (10 ; 110) selon l'une quelconque des revendications précédentes, comprenant en outre au moins un ruban adhésif résistant aux hautes températures enroulé autour du support (24 ; 124) et conçu pour fixer le support (24 ; 124) dans la partie intérieure du dispositif (10 ; 110).

6. Dispositif de génération d'aérosol (10 ; 110) selon l'une quelconque des revendications précédentes, dans lequel la LED (37 ; 137) est alignée avec l'ouverture latérale (62 ; 162) selon un axe transversal (Z) lorsque le support (24 ; 124) est reçu dans la partie intérieure du dispositif (10 ; 110), l'axe transversal (Z) étant perpendiculaire à l'axe du dispositif (X).

7. Dispositif de génération d'aérosol (10) selon la revendication 6, dans lequel le tube de guidage de la lumière (70) définit une forme cylindrique s'étendant le long de l'axe transversal (Z) lorsqu'il est inséré dans l'ouverture latérale (62).

8. Dispositif de génération d'aérosol (10) selon la revendication 7, dans lequel la cavité centrale (72) est scellée.

9. Dispositif de génération d'aérosol (110) selon l'une quelconque des revendications 1 à 5, dans lequel la carte de circuit imprimé (134) comprend en outre un interrupteur (138) aligné avec l'ouverture latérale (162) selon un axe transversal (Z) lorsque le support (124) est reçu dans la partie intérieure du dispositif (110), l'axe transversal (Z) étant perpendiculaire à l'axe du dispositif (X).

10. Dispositif de génération d'aérosol (110) selon la revendication 9, dans lequel la LED (137) est disposée à l'écart de l'axe transversal (Z) lorsque le support (124) est reçu dans la partie intérieure du dispositif (110).

11. Dispositif de génération d'aérosol (110) selon la revendication 10, dans lequel le tube de guidage de la lumière (170) comprend une première partie (173) de forme cylindrique s'étendant le long de l'axe transversal (Z) et une deuxième partie (174) configurée pour relier la LED (137) à la première partie (173), lorsque le tube de guidage de la lumière (170) est inséré dans l'ouverture latérale (162).

12. Dispositif de génération d'aérosol (110) selon l'une quelconque des revendications 9 à 11, dans lequel la goupille (171) s'étend entre deux extrémités et est configurée pour traverser la cavité centrale (172) afin d'entrer en contact avec l'interrupteur (138) par l'une de ses extrémités, l'extrémité opposée étant configurée pour affleurer la cavité centrale (172).

13. Dispositif de génération d'aérosol (110) selon l'une quelconque des revendications 9 à 11, dans lequel la goupille (171) s'étend entre deux extrémités et est configurée pour traverser la cavité centrale (172) afin d'entrer en contact avec l'interrupteur (138) par l'une de ses extrémités, l'extrémité opposée étant configurée pour faire saillie depuis la cavité centrale (172).

14. Procédé d'assemblage d'un dispositif de génération d'aérosol (10 ; 110), comprenant les étapes suivantes :
- fixer une carte de circuit imprimé (34 ; 134) comprenant une LED (37 ; 137) sur un support (24 ; 124) ;
- insérer le support (24 ; 124) dans une partie intérieure du dispositif (10 ; 110) délimitée par une enveloppe extérieure (26 ; 126), l'enveloppe extérieure (26; 115) comprenant une surface latérale (61 ; 161) s'étendant le long d'un axe du dispositif (X) et définissant une ouverture latérale (62 ; 162) ;
- insérer un tube de guidage de la lumière (70 ; 170) définissant une cavité centrale (72 ; 172) dans l'ouverture latérale (62 ; 162) pour s'étendre de la LED (37 ; 137) à la surface latérale (61 ; 161) à travers l'ouverture latérale (62 ; 162) ;
- insérer une goupille (71 ; 171) dans la cavité centrale (72 ; 172) pour bloquer le tube de guidage de la lumière (70 ; 170) dans l'ouverture latérale (62 ; 162).

15. Procédé d'assemblage selon la revendication 14, dans lequel l'enveloppe extérieure (26 ; 126) est constituée d'une seule pièce et définit une ouverture d'insertion (60) et dans lequel l'étape d'insertion du support (24 ; 124) dans la partie intérieure du dispositif (10 ; 110) est réalisée en faisant glisser le support (24 ; 124) dans la partie intérieure du dispositif (10 ; 110) à travers l'ouverture d'insertion (60).
